# FASCICULE DE BREVET EUROPEEN

(11) **EP 3 169 543 B1**
(45) Date de publication et mention de la délivrance du brevet: **12.09.2018**
(21) Numéro de dépôt: 15738091.6
(22) Date de dépôt: 15.07.2015
(51) Int. Cl.: B60J 7/02, B60J 7/057

(54) **PAVILLON VITRE A PANNEAU MOBILE CONTROLE PAR DES NAVETTES**
GLASDACH MIT EINER DURCH SCHIFFCHEN GESTEUERTEN MOBILEN PLATTE
GLAZED ROOF WITH A MOBILE PANEL CONTROLLED BY SHUTTLES

(30) Priorité: 15.07.2014 FR 1456801
(43) Date de publication de la demande: 24.05.2017
(73) Titulaire: Advanced Comfort Systems France SAS - ACS France, 79302 Bressuire Cedex (FR)
(72) Inventeur: DESBOIS, Mickaël, F-79200 Parthenay (FR)
(74) Mandataire: Vidon Brevets & Stratégie
(86) Numéro de dépôt international: PCT/EP2015/066191
(87) Numéro de publication internationale: WO 2016/008938

(56) Documents cités:
- EP-A1- 1 747 928
- EP-A2- 2 208 628
- WO-A1-2007/128290
- DE-A1-102010 008 365
- DE-A1-102013 211 715

## Description

### 1. Domaine de l'invention

Le domaine de l'invention est celui des baies vitrées pour véhicules automobiles, et plus précisément pour les pavillons de tels véhicules.

Plus précisément, l'invention concerne les pavillons vitrés comprenant au moins une ouverture, coopérant avec un panneau vitré mobile coulissant, et en particulier les dispositifs connus sous le nom de « baie flush », ou « toit ouvrant flush », conçus pour être montés de façon affleurante (ou quasi affleurante) avec la carrosserie.

Dans le cadre de la présente demande de brevet, on entend par le terme « panneau vitré » tout panneau, fixe ou mobile par rapport à la carrosserie, substantiellement transparent ou translucide, participant au clair de baie. Un tel panneau peut être réalisé en verre ou en tout autre matériau adapté, tel que le polycarbonate.

Dans certains modes de réalisation, le panneau peut être constitué de plusieurs éléments affleurants entre eux, vus de l'extérieur. Le cas échéant, au moins un de ces éléments peut être en tout ou en partie opaque, et par exemple en métal ou en plastique. Par ailleurs les bords d'un panneau vitré peuvent être opacifiés, par exemple par sérigraphie.

### 2. Art antérieur

Il est actuellement souhaité, dans le domaine des véhicules automobiles, de proposer de plus en plus de surfaces vitrées. En particulier, on propose régulièrement des véhicules présentant un pavillon équipé d'un ou plusieurs éléments vitrés. Dans certains cas, l'intégralité du pavillon est en verre, ou en un matériau similaire laissant passer la lumière, et notamment les rayons du soleil.

Des solutions ont également été proposées pour dégager une, voire plusieurs, ouvertures dans un tel pavillon, notamment pour former un toit ouvrant.

Le Demandeur a notamment proposé plusieurs solutions pour contrôler les mouvements d'un panneau mobile d'une baie flush ou d'un toit ouvrant flush. Ces mouvements sont généralement complexes, puisque l'ouverture du panneau mobile nécessite tout d'abord un dégagement, par rapport à l'ouverture réalisée dans la partie fixe du pavillon, puis un coulissement, au-dessus ou en dessous de la partie fixe.

Il peut également être prévu que le panneau mobile soit entrebâillant, c'est-à-dire qu'il bascule par rapport à l'un de ses bords, généralement le bord orienté vers l'avant du véhicule. Il peut aussi être nécessaire, dans certains modes de réalisation, de contrôler le déplacement d'autres éléments, tel qu'un déflecteur, qui vient guider l'air au-dessus de l'ouverture, lorsque le panneau mobile prend une position ouverte.

Le Demandeur a proposé une solution efficace, permettant de transformer un mouvement d'actionnement simple, monodirectionnel, suivant par exemple une courbe, définie par exemple par le pavillon. Pour ceci, on met en oeuvre des navettes, guidées en translation le long de deux rails et pouvant être solidarisées à des câbles, par exemple du type « push/pull ».

Ces navettes contrôlent généralement une cinématique complexe, notamment à l'aide de lumières ou de gorges guidant des pions ou des biellettes agissant directement ou indirectement sur le panneau mobile, et le cas échéant sur un autre élément mobile. Ces navettes sont par exemple utilisées pour assurer le dégagement de la partie dirigée vers l'avant du panneau mobile et/ou son entrebâillement.

Il peut donc être nécessaire de désolidariser, pour certains de ces mouvements, les navettes des câbles, pour que, selon les cas, le câble « push/pull » continue son déplacement en entraînant d'autres éléments dont il est solidaire, les navettes restant immobiles, ou, inversement, de permettre que les navettes continuent leur déplacement, en étant par exemple entraînées par le déplacement du panneau mobile, alors que les câbles « push/pull » restent immobiles. Il est donc nécessaire de prévoir des moyens de solidarisation/désolidarisation des navettes, par exemple sous la forme d'un crochet ou d'un élément de connexion.

Les différents éléments permettant de contrôler les différents mouvements du panneau mobile sont complexes, et doivent être assemblées avec précision. Il est donc souhaitable de proposer des solutions simples, efficaces et fiables. Il est en outre souhaitable que ces différents moyens soient peu encombrants, l'espace étant disponible étant très limité, et de poids reduit.

Le document WO2007/128290 A1 est considéré comme l'état de la technique le plus proche.

### 3. Exposé de l'invention

L'invention a notamment pour objectif de porter une solution simple et efficace pour la solidarisation et la désolidarisation d'une navette avec son câble.
Ces objectifs, ainsi que d'autres cas paraîtront plus précisément par la suite, sont atteints à l'aide d'un pavillon vitré de véhicule automobile, comprenant une partie fixe dans laquelle est ménagée une ouverture, et un panneau mobile par rapport à la partie fixe, apte à obturer ladite ouverture dans une position d'obturation, le déplacement dudit panneau mobile mettant en oeuvre deux navettes guidés en translation respectivement dans deux rails, des moyens de solidarisation / désolidarisation permettant de lier ou non le déplacement de chacune desdites navettes au déplacement d'un câble d'entrainement.

Selon l'invention, lesdits moyens de solidarisation / désolidarisation comprennent un élément d'accrochage mobile entre deux positions, et portant :
- une position de solidarisation, dans laquelle il forme un angle compris entre 5 et 15° avec la direction dudit câble d'entraînement, une portion d'extrémité dudit élément d'accrochage coopérant avec un logement complémentaire dans ladite navette ;
- une position de désolidarisation, dans laquelle il s'étend sensiblement parallèlement à la direction dudit câble d'entraînement, ladite portion d'extrémité étant déplacée hors dudit logement.

Ainsi, la solidarisation est obtenue en faisant passer l'élément d'accrochage d'une position dans laquelle il est parallèle ou pratiquement parallèle au câble, et peut être déplacé dans le même canal que ce câble. Dans la position de solidarisation, cet élément d'accrochage, formant pêne, est déplacé angulairement, par rapport à l'axe du câble, pour que son extrémité vienne coopérer avec la navette, plus préciser un logement formant gâche, et que cette navette et le câble soit entrainés en même temps.

Ce déplacement angulaire peut être obtenu par des moyens de rappel, amenant l'élément d'accrochage dans la position de solidarisation en l'absence de contrainte, ou à l'aide d'une rampe fixe, qui guide progressivement la portion d'extrémité, formant pêne, vers le logement formant gâche.

Dans un premier mode de réalisation particulier, lesdits moyens de solidarisation / désolidarisation peuvent donc comprendre un crochet surmoulé sur l'extrémité libre dudit câble d'entraînement, apte à coopérer avec un élément d'accrochage complémentaire prévu sur ladite navette, dans ladite première zone de déplacement.

On dispose ainsi d'un système simple à fabriquer et à mettre en oeuvre, peu encombrant et peu coûteux, et très efficace.

Selon un mode de réalisation particulier, ledit crochet peut prendre deux positions, une position déployée lorsqu'il se trouve dans ladite première zone de déplacement, et une position repliée lorsqu'il se trouve dans ladite seconde zone de déplacement.

Notamment, ledit crochet peut être conformé de façon à, et/ou équipé de moyens de rappel tendant à, le ramener dans ladite position déployée.

Selon un mode de réalisation particulier, ledit câble circule dans une gaine ou un logement de guidage solidaire dudit rail.

Dans ce cas, ladite gaine ou ledit logement peut présenter une portion ouverte dans ladite première zone de déplacement et fermée dans ladite seconde zone de déplacement, contraignant ledit crochet à prendre ladite position repliée.

Selon une mise en oeuvre particulière, ledit crochet présente une zone de contact, coopérant avec l'extrémité de ladite gaine ou dudit logement pour contrôler le déplacement dudit crochet entre les deux positions.

Ceci permet de mieux contrôler le changement de positions du crochet.

Selon un mode de réalisation particulier, ledit crochet présente deux éléments articulés, un premier élément mobile pour assurer la solidarisation avec la navette et un second élément restant dans le prolongement dudit câble.

Ledit premier élément peut porter un pion de verrouillage coopérant avec une encoche formée dans la navette.

Selon un deuxième mode de réalisation, ledit élément d'accrochage présente un pêne monté dans le prolongement dudit câble, et guidé entre ladite position de solidarisation et ladite position de désolidarisation par une rampe de guidage solidaire de ladite partie fixe.

Dans ce cas, ledit pêne peut être surmoulé sur l'extrémité dudit câble ou sur un bras mobile par rapport audit câble et monté dans le prolongement de celui-ci.

Ledit pêne peut notamment coopérer avec un évidement formé dans ladite navette.

Une gaine de liaison peut solidariser l'extrémité libre du câble et une extrémité du bras.

Selon un mode de réalisation particulier, ledit bras peut être réalisé dans un matériau flexible.

Selon un autre mode de réalisation particulier, ledit bras comporte une lame articulée par rapport audit câble.

Selon un autre mode de réalisation, ledit bras peut être monté mobile en rotation par rapport à pièce de liaison solidaire dudit câble et/ou d'une gaine qui le porte.

### 4. Exposé des figures

D'autres caractéristiques et avantages de l'invention apparaîtront à la lecture de la description suivante, d'un mode de réalisations particulières de l'invention, données à titre de simples exemples illustratifs et non limitatives, illustrés par les dessins annexés parmi lesquels :
- les figures 1 à 3 illustrent un premier mode de réalisation des moyens de solidarisation/désolidarisation, mettant en oeuvre un crochet articulé :
   - figure 1 : vue en coupe simplifiée de la navette solidarisée au câble d'entraînement par l'intermédiaire du crochet ;
   - figure 2 : vue en coupe simplifiée de la navette de la figure 1 déplacée vers la droite et toujours solidarisée au câble d'entraînement ;
   - figure 3 : vue en coupe simplifiée la navette des figures 1 et 2, désolidarisée du câble d'entraînement, le crochet étant replié ;
- les figures 4 à 8 illustrent un second mode de réalisation des moyens de solidarisation/désolidarisation, mettant en oeuvre un membre de connexion constitué d'un bras et d'un pêne :

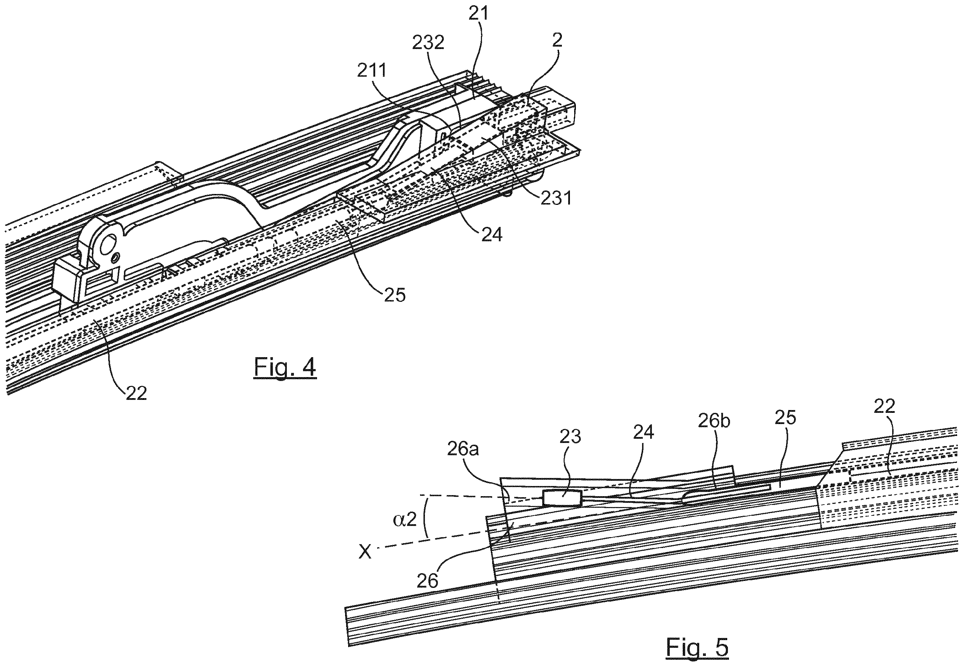

   - figure 4 : vue filaire en trois dimensions de la navette solidarisée au câble d'entrainement par l'intermédiaire du pêne ;
   - figure 5 : vue en coupe du membre de connexion coopérant avec une rampe de guidage d'une partie fixe du véhicule ;

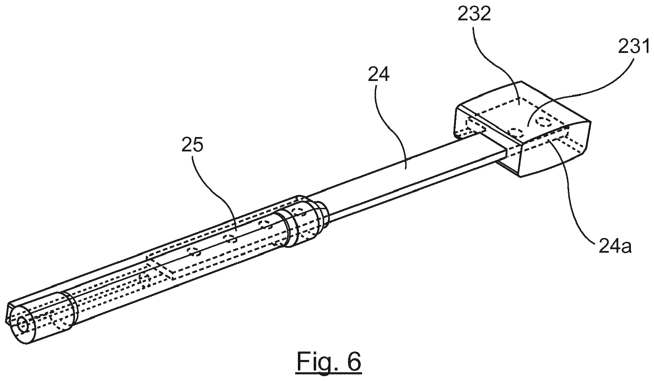

   - figure 6 : vue en trois dimensions du membre de connexion des figures 4 et 5 ;

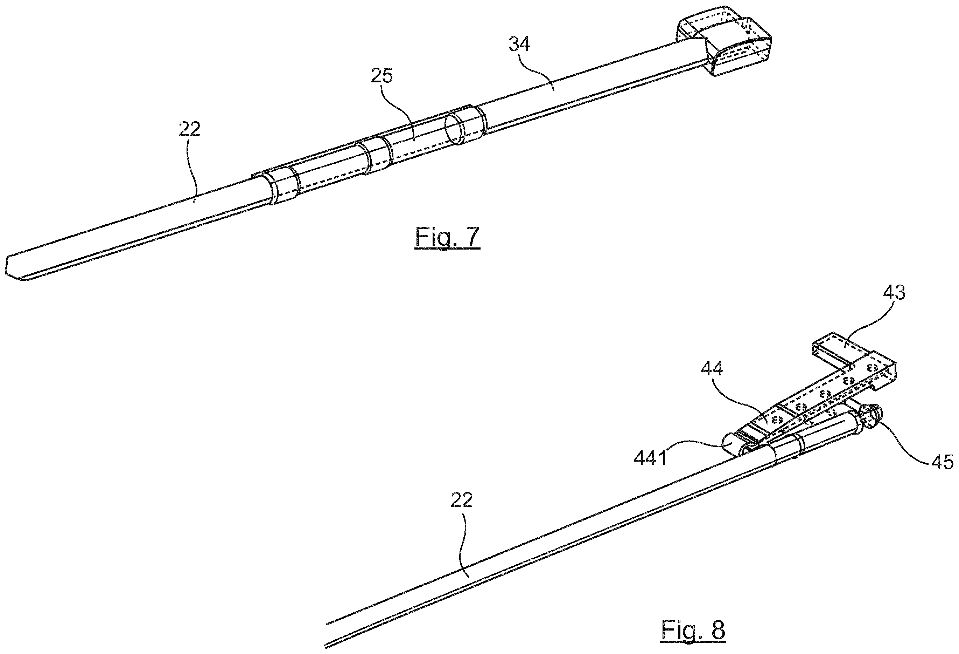

   - figure 7 : première variante de réalisation du membre de connexion ;
   - figure 8 : deuxième variante de réalisation du membre de connexion.

### 5. Description de l'invention

### 5.1 Premier mode de réalisation

L'invention concerne donc un pavillon vitré de véhicule, et plus précisément le déplacement de celui-ci.

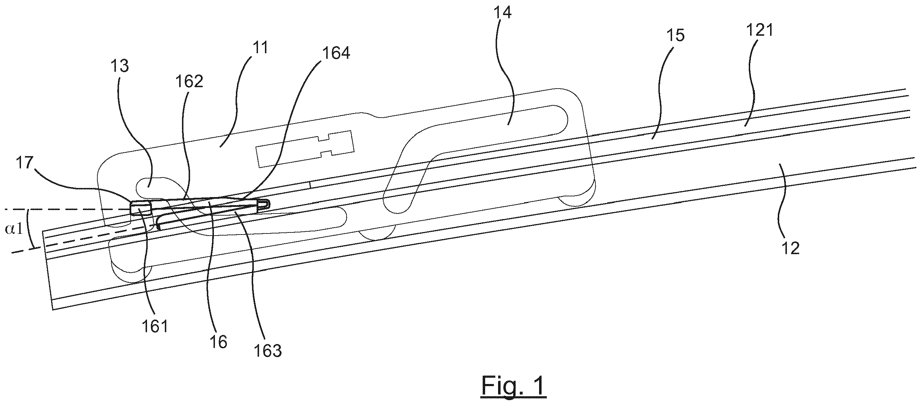

Comme illustré par les trois vues en coupe simplifiée des figures 1 à 3, le panneau mobile du toit ouvrant est entrainé en déplacement par une navette 11 guidée dans un rail 12. Généralement, deux navettes et deux rails symétriques sont placés de chaque côté du véhicule, pour contrôler le déplacement du panneau mobile.

La navette 11 présente, dans ce premier mode de réalisation, deux lumières 13 et 14, aptes chacune à recevoir par exemple un doigt ou un patin mobile, associé à un élément contrôlant le déplacement du panneau mobile, par exemple sous la forme d'une biellette. Ces éléments ne sont pas décrits ici en détails, ces aspects étant variables selon les mises en oeuvre, et des solutions particulières étant connues.

Le déplacement de la navette 11 par rapport au rail 12 est contrôlé, au moins en partie, par le déplacement d'un câble d'entrainement de type « push/pull » 15, guidé dans une portion 121 du rail 12. Le déplacement du câble 15 peut être manuel et/ou motorisé.

L'extrémité du câble d'entrainement 15 porte un élément d'accrochage, ici un crochet 16, dont l'extrémité libre présente un élément d'accrochage 161, formant pêne, prévu pour coopérer avec une encoche 17 ou un logement, prévu à cet effet dans la navette 11, et formant gâche. Les termes « pêne » et « gâche » ne renvoient pas ici à une fonction de verrouillage du toit ouvrant, mais à la fonction respective des deux éléments mâle et femelle, destinés à s'assembler pour solidariser la navette et le câble, et à se désassembler l'un de l'autre, pour les désolidariser.

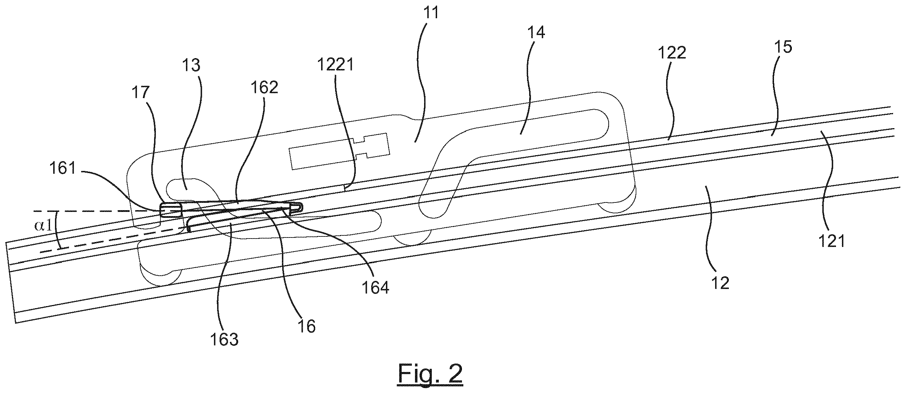

Ainsi, dans la position illustrée par les figures 1 et 2, qui illustrent une première zone de déplacement, le crochet 16 est en prise avec la navette 11, et le déplacement du câble 15 dans la gaine 121 est lié au déplacement de la navette 11 par rapport au rail 12.

Selon l'invention, le crochet 16 est surmoulé sur l'extrémité du câble 15, ce qui permet une fabrication, un assemblage et une mise en oeuvre simples et efficaces.

Le crochet 16 peut comprendre deux éléments 162 et 163, articulés l'un par rapport à l'autre et conçus de façon que, en l'absence de contrainte, ils tendent à s'éloigner l'un de l'autre, l'élément 63 restant dans le prolongement du câble 15, et l'élément 162 s'éloignant de l'élément 163 pour que son extrémité 161 vienne en prise avec l'encoche 17. Dans cette position éloignée, les deux éléments 162 et 163 forment un angle al compris entre 5 et 15°.

Ce crochet 16 peut par exemple être réalisé en matière plastique ou en métal, et être flexible. Le cas échéant, des moyens de rappel peuvent être prévus, pour forcer l'élément 162 à prendre la position illustrée sur la figure 1 et sur la figure 2.

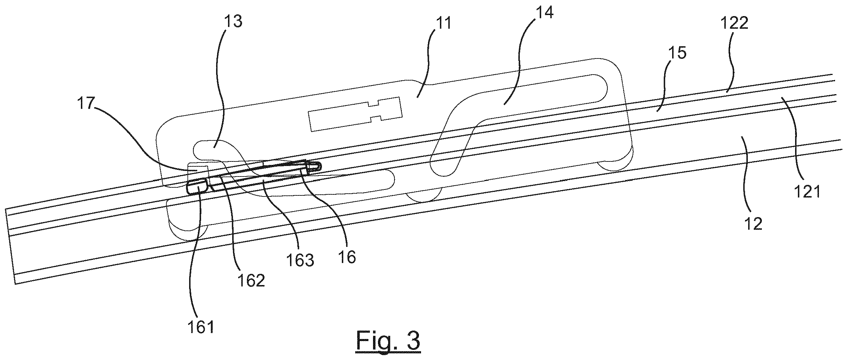

La gaine (plus généralement, le logement de guidage du câble) 121 présente une paroi supérieure 122, interrompue sur une portion d'extrémité (correspondant à la première zone de déplacement, c'est-à-dire à la partie dans laquelle le crochet est en prise avec la navette, comme illustré par les figures 1 et 2). Lorsque le crochet 16 atteint l'extrémité 1221 de la partie supérieure 122 (figure 2), cette dernière agit sur l'élément 162 du crochet 16, pour le ramener progressivement vers l'élément 163, au fur et mesure que le câble 15 se déplace vers la droite (figure 3, qui illustre le début de la seconde zone de déplacement, dans laquelle le câble est déplacé alors que la navette reste immobile).

Ainsi, l'élément 162 se plaque sur l'élément 163 (ils sont ainsi sensiblement parallèles entre eux et donc avec la direction définie par le câble), et son extrémité 161 se dégage de l'encoche (ou gâche) 17. Le crochet (ou pêne) est donc libéré de la navette 11 qui peut se déplacer par rapport au rail 12, alors que le câble 15 reste immobile dans la gaine 121. On se trouve dans une position de désolidarisation du câble et de la navette.

L'élément 162 présente une partie incurvée 164, concave, permettant de bien contrôler, si nécessaire, le mouvement de cet élément 162 lorsqu'il vient en contact avec l'extrémité 1221.

Lorsque le câble d'entrainement 15 est déplacé vers la gauche, sur les figures, et que le crochet 16 atteint l'extrémité 1221 de la gaine, le crochet reprend automatiquement, du fait de sa flexibilité, de sa conformation et/ou sous l'action de moyens de rappel, la position de solidarisation, et peut venir se solidariser à la navette, (figures 1 et 2), l'extrémité 161 venant en prise avec l'encoche 17.

Les mouvements de la navette 11 et du câble 15 sont alors liés.

### 5.2 Deuxième mode de réalisation

Dans ce deuxième mode de réalisation, illustré par les figures 4 à 8, l'élément de solidarisation ne prend pas sa position du seul fait de sa flexibilité, de sa conformation et/ou sous l'action de moyens de rappel. Il est guidé par une portion de guidage solidaire de la partie fixe du toit (par exemple solidaire du rail), formant rampe de guidage 26 pour guider le pêne 23 vers un évidement 211, ou gâche (visible sur la figure 4), formé sur la navette 21, avec un dégagement débouchant dans la partie basse de la navette.

Le câble 22 peut présenter sensiblement des caractéristiques identiques au câble décrit dans le premier mode de réalisation.

Dans ce second mode de réalisation, l'élément d'accrochage comporte un pêne 23 monté à une première extrémité d'un bras 24 flexible. Ce bras flexible est solidarisé à l'extrémité libre du câble 22. Par exemple, une gaine de liaison 25 peut être surmoulée à la fois à l'extrémité libre du câble 22 et à la deuxième extrémité 24a du bras 24. Le surmoulage permet une fabrication, un assemblage et une mise en oeuvre simples et efficaces.

Le pêne 23 présente une portion de contact adaptée pour venir s'emboîter dans l'évidement 211 formé dans la navette, tout en restant mobile à l'intérieur de celui-ci. Le pêne 23 est par exemple réalisé en plastique. Dans ce mode de réalisation, une première portion 231 du pêne glisse sur la rampe, et une seconde portion 232 assure la fonction de pêne. Cette seconde portion est légèrement décalée, par rapport au plan vertical défini par le câble 22 et le bras 24.

Les figures 4 et 5 illustrent la rampe de guidage 26, sur ou le cas échéant à l'intérieur de laquelle le pêne 23 peut coulisser. Cette rampe de guidage 26 présente au moins une première portion rectiligne 26a, inclinée par rapport à la direction X du câble d'entraînement, et le cas échéant une deuxième portion rectiligne 26b, parallèle à la direction X du câble d'entraînement. La rampe forme par exemple un angle compris entre 5 et 15° avec cette direction X. Dans certains modes de réalisation, un profil non rectiligne, notamment pour la première portion, peut être prévu.

Comme dans le premier mode de réalisation, le déplacement du câble 22 et de la navette 21 sont liés, dans une première position, dite position de solidarisation. La position du membre de connexion, et en particulier du pêne 23, dans cette première zone est illustrée sur les figures 4 et 5.

Le mouvement du câble 22 (vers la gauche sur la figure 4, vers la droite sur la figure 5) correspond à une translation du pêne 23 dans une direction similaire, et réciproquement. Le pêne 23 étant en prise avec la navette 21, par l'intermédiaire de l'évidement 211, le déplacement du câble 22 assure le déplacement de la navette 21 (et donc de la partie mobile du pavillon) par rapport à la partie fixe du pavillon.

Au fur et à mesure que le pêne se rapproche de la deuxième portion de rampe 26b, il se déplace à l'intérieur de l'évidement 211 (vers le bas) de la navette 21. Lorsque le pêne 23 atteint la deuxième portion de rampe 26b, on se trouve dans une seconde position, dite position de désolidarisation. Le pêne 23 est dégagé de l'évidement 211, et le mouvement de la navette 21 se trouve dissocié du mouvement du pêne 23 et donc du câble 22, qui s'arrête.

Le bras 24 du membre de connexion a pour fonction de lier de manière flexible le pêne 23 et le câble 22 par l'intermédiaire de la gaine 25. Ainsi, il est de préférence réalisé dans un matériau souple ou flexible, par exemple une lame d'acier, apte à passer de la position de solidarisation, en formant un angle α2 par rapport à la direction X définie par le câble (au voisinage de la lame, si le câble suit un déplacement courbe), à la position de désolidarisation, dans laquelle il s'étend dans le prolongement du câble. Il peut également être essentiellement rigide, et articulé par rapport à la gaine 25.

Lorsque le câble d'entrainement 22 est déplacé vers la droite sur la figure 4, vers la gauche sur la figure 5), et que le pêne 23 atteint la rampe de guidage, celui-ci coulisse en sens inverse dans la deuxième portion 26b jusqu'à atteindre la première portion 26a, et retrouver la position de solidarisation. La navette 21 et le câble 22 sont à nouveau liés, ou solidarisés.

Les figures 4 à 6 illustrent un mode de réalisation d'un membre de connexion comportant un bras 24 en forme de lame dont l'extrémité 24a porte le pêne 23 permettant la solidarisation. Le pêne 23 est par exemple surmoulé à l'extrémité 24a du bras.

Les figures 6 à 8 présentent toutes trois le membre de connexion dans la configuration qu'il adopte dans la position de désolidarisation.

Les figures 7 et 8 présentent deux variantes de réalisation du membre de connexion, et donc du pêne 23 et du bras 24.

Selon une première variante (figure 7), le bras 34 est formé d'une tige souple et/ou articulé par rapport au câble 22, de diamètre sensiblement égal au diamètre du câble 22, ou formé par la partie d'extrémité de ce câble 22.

Selon une deuxième variante (figure 8), le bras 44 est constitué d'une lame décalée par rapport à la direction X de la gaine 45. Le bras est lié à la gaine par une pièce de liaison 441, assurant une liaison pivot entre les deux éléments. Le bras 44 porte, à son extrémité libre le pêne 43 (s'étendant dans ce mode de réalisation perpendiculairement au bras), destiné à coopérer avec l'évidement 211 de la navette 21. Dans ce mode de réalisation le pêne 43 est surmoulé sur le bras.

## Revendications

1. Pavillon vitré de véhicule automobile, comprenant une partie fixe dans laquelle est ménagée une ouverture, et un panneau mobile par rapport à la partie fixe, apte à obturer ladite ouverture dans une position d'obturation,
le déplacement dudit panneau mobile mettant en oeuvre deux navettes (11, 21) guidées en translation respectivement dans deux rails (12), des moyens de solidarisation / désolidarisation permettant de lier ou non le déplacement de chacune desdites navettes au déplacement d'un câble d'entrainement (15),
**caractérisé en ce que** lesdits moyens de solidarisation / désolidarisation comprennent un élément d'accrochage mobile entre deux positions, et portant :
- une position de solidarisation, dans laquelle il forme un angle compris entre 5 et 15° avec la direction dudit câble d'entraînement, une portion d'extrémité dudit élément d'accrochage coopérant avec un logement complémentaire dans ladite navette ;
- une position de désolidarisation, dans laquelle il s'étend sensiblement parallèlement à la direction dudit câble d'entraînement, ladite portion d'extrémité étant déplacée hors dudit logement.

2. Pavillon vitré selon la revendication 1, **caractérisé en ce que** ledit élément d'accrochage comprend un crochet (16) surmoulé sur l'extrémité libre dudit câble d'entraînement (15).

3. Pavillon vitré selon la revendication 2,, **caractérisé en ce que** ledit crochet (16) est conformé de façon à, et/ou équipé de moyens de rappel tendant à, le ramener dans ladite position déployée.

4. Pavillon vitré selon l'une quelconque des revendications 1 à 3, **caractérisé en ce que** ledit câble (15) circule dans une gaine (121) ou un logement de guidage solidaire dudit rail (12).

5. Pavillon vitré selon la revendication 4, **caractérisé en ce que** ladite gaine (121) ou ledit logement présente une portion ouverte dans ladite première zone de déplacement et fermée dans ladite seconde zone de déplacement, contraignant ledit crochet (16) à prendre ladite position repliée.

6. Pavillon selon la revendication 5, **caractérisé en ce que** ledit crochet (16) présente une zone de contact, coopérant avec l'extrémité de ladite gaine (121) ou dudit logement pour contrôler le déplacement dudit crochet (16) entre les deux positions.

7. Pavillon selon l'une quelconque des revendications 2 à 6, **caractérisé en ce que** ledit crochet (16) présente deux éléments articulés (162, 163), un premier élément (162) mobile pour assurer la solidarisation avec la navette (11) et un second élément (163) restant dans le prolongement dudit câble (15).

8. Pavillon selon la revendication 7, **caractérisé en ce que** ledit premier élément (162) porte un pion de verrouillage coopérant avec une encoche (17) formée dans la navette.

9. Pavillon vitré selon la revendication 1, **caractérisé en ce que** ledit élément d'accrochage présente un pêne (23) monté dans le prolongement dudit câble, et guidé entre ladite position de solidarisation et ladite position de désolidarisation par une rampe de guidage solidaire de ladite partie fixe.

10. Pavillon selon la revendication 9, **caractérisé en ce que** ledit pêne est surmoulé sur l'extrémité dudit câble ou sur un bras (24) mobile par rapport audit câble et monté dans le prolongement de celui-ci.

11. Pavillon vitré selon la revendication 9 ou 10, **caractérisé en ce que** ledit pêne (23) coopère avec un évidement (211) formé dans ladite navette.

12. Pavillon vitré selon l'une quelconque des revendications 10 et 11, **caractérisé en ce qu'**une gaine de liaison (25) solidarise l'extrémité libre du câble et une extrémité (24a) du bras (24).

13. Pavillon vitré selon l'une quelconque des revendications 10 à 12, **caractérisé en ce que** ledit bras est réalisé dans un matériau flexible.

14. Pavillon vitré selon l'une quelconque des revendications 10 à 13, **caractérisé en ce que** ledit bras comporte une lame articulée par rapport audit câble.

15. Pavillon vitré selon l'une quelconque des revendications 10 à 14, **caractérisé en ce que** ledit bras (44) est monté mobile en rotation par rapport à pièce de liaison (46) solidaire dudit câble (43) et/ou d'une gaine (45) qui le porte.

## Patentansprüche

1. Glasdach für ein Kraftfahrzeug, umfassend einen fixierten Teil, in dem eine Öffnung bereitgestellt ist, und ein Paneel, das in Bezug auf den fixierten Teil bewegbar ist, und das geeignet ist, die Öffnung in einer Schließposition zu verschließen,
wobei die Bewegung des mobilen Paneels zwei Schiffchen (11, 21) implementiert, die jeweils translatorisch in zwei Schienen (12) geführt werden, wobei Mittel zum Befestigen/Trennen es ermöglichen, die Bewegung jedes der Schiffchen mit der Bewegung eines Antriebskabels (15) zu verbinden oder nicht,
**dadurch gekennzeichnet, dass** die Mittel zum Befestigen/Trennen ein Hakenelement umfassen, das zwischen zwei Positionen bewegbar ist:
- einer befestigten Position, in der es einen Winkel zwischen 5 und 15° mit der Richtung des Antriebskabels bildet, wobei ein Endabschnitt des Hakenelements mit einem komplementären Gehäuse in dem Schiffchen zusammenwirkt;
- einer getrennten Position, in der es sich im Wesentlichen parallel zur Richtung des Antriebskabels erstreckt, wobei der Endabschnitt aus dem Gehäuse bewegt wird.

2. Glasdach nach Anspruch 1, **dadurch gekennzeichnet, dass** das Hakenelement einen Haken (16) umfasst, der über das freie Ende des Antriebskabels (15) geformt ist.

3. Glasdach nach Anspruch 2, **dadurch gekennzeichnet, dass** der Haken (16) so geformt ist, dass er in die befestigte Position zurückgebracht wird und/oder mit einem Rückholmittel ausgestattet ist, um ihn in die befestigte Position zurückzubringen.

4. Glasdach nach einem der Ansprüche 1 bis 3, **dadurch gekennzeichnet, dass** das Kabel (15) in einer Hülle (121) oder einem Führungsgehäuse verläuft, das an der Schiene (12) befestigt ist.

5. Glasdach nach Anspruch 4, **dadurch gekennzeichnet, dass** die Hülle (121) oder das Gehäuse einen Abschnitt, der in einer ersten Bewegungszone offen ist, und einen Abschnitt, der in einer zweiten Bewegungszone geschlossen ist, aufweist, wobei der Haken (16) darauf beschränkt ist, die getrennte Position einzunehmen.

6. Glasdach nach Anspruch 5, **dadurch gekennzeichnet, dass** der Haken (16) eine Kontaktzone aufweist, die mit dem Ende der Hülle (121) oder dem Gehäuse zusammenwirkt, um die Bewegung des Hakens (16) zwischen den beiden Positionen zu steuern.

7. Glasdach nach einem der Ansprüche 2 bis 6, **dadurch gekennzeichnet, dass** der Haken (16) zwei Scharnierelemente (162, 163) aufweist, ein erstes bewegbares Element (162), um die Befestigung mit dem Schiffchen (11) sicherzustellen, und ein zweites Element (163), das in der Verlängerung des Kabels (15) bleibt.

8. Glasdach nach Anspruch 7, **dadurch gekennzeichnet, dass** das erste Element (162) einen Verriegelungsstift trägt, der mit einer im Schiffchen gebildeten Kerbe (17) zusammenwirkt.

9. Glasdach nach Anspruch 1, **dadurch gekennzeichnet, dass** das Hakenelement einen Bolzen (23) aufweist, der in der Verlängerung des Kabels montiert ist und zwischen der befestigten Position und der getrennten Position durch eine Führungsrampe geführt wird, die am fixierten Teil befestigt ist.

10. Glasdach nach Anspruch 9, **dadurch gekennzeichnet, dass** der Bolzen über das Ende des Kabels oder über einen Arm (24) geformt ist, der in Bezug auf das Kabel bewegbar ist und in seiner Verlängerung montiert ist.

11. Glasdach nach Anspruch 9 oder 10, **dadurch gekennzeichnet, dass** der Bolzen (23) mit einer Vertiefung (211) zusammenwirkt, die in dem Schiffchen gebildet ist.

12. Glasdach nach einem der Ansprüche 10 und 11, **dadurch gekennzeichnet, dass** eine Verbindungshülle (25) das freie Ende des Kabels und ein Ende (24a) des Arms (24) befestigt.

13. Glasdach nach einem der Ansprüche 10 bis 12, **dadurch gekennzeichnet, dass** der Arm aus einem flexiblen Material gebildet ist.

14. Glasdach nach einem der Ansprüche 10 bis 13, **dadurch gekennzeichnet, dass** der Arm einen Streifen umfasst, der mit dem Kabel scharnierverbunden ist.

15. Glasdach nach einem der Ansprüche 10 bis 14, **dadurch gekennzeichnet, dass** der Arm (44) drehbar bewegbar montiert ist in Bezug auf den Verbindungsteil (46), der am Kabel (43) und/oder an einer Hülle (45), die dieses trägt, befestigt ist.

## Claims

1. Glazed roof for a motor vehicle comprising a fixed part in which an aperture is made and a panel that is movable relative to the fixed part, capable of closing off said aperture in a closing-off position,
the moving of said movable panel implementing two shuttles (11, 21) guided in translation respectively in two rails (12), means for fixed attachment/detachment making it possible to link or not link the movement of each of said shuttle with the movement of a driving cable (15),
**characterized in that** said means of fixed attachment/detachment comprise a hooking element movable between two positions:
- a position of fixed attachment in which it forms an angle of 5° to 15° with the direction of said driving cable, an end portion of said hooking element cooperating with a complementary housing in said shuttle;
- a detached position in which it extends appreciably in parallel to the direction of said driving cable, said end portion being moved out of said housing.

2. Glazed roof according to claim 1, **characterized in that** said hooking element comprises a hook (16) over-molded on the free end of said driving cable (15).

3. Glazed roof according to claim 2, **characterized in that** said hook (16) is shaped so as to be brought back into said fixed attachment position and/or fitted out with pull-back means tending to bring it back into said fixed attachment position.

4. Glazed roof according to any one of the claims 1 to 3, **characterized in** said cable (15) circulates in a sheath (121) or a guide housing fixedly attached to said rail (12).

5. Glazed roof according to claim 4, **characterized in that** said sheath (121) or said housing has a portion that is open in a first moving area and a portion that is closed is a second moving area, constraining said hook (16) to take said detached position.

6. Glazed roof according to claim 5, **characterized in that** said hook (16) has a contact area cooperating with the end of said sheath (121) or said housing to control the movement of said hook (16) between the two positions.

7. Glazed roof according to any one of the claims 2 to 6, **characterized in that** said hook (16) has two hinged elements (162, 163), a first movable element (162) to ensure fixed attachment with the shuttle (11) and a second element (163) remaining in the extension of said cable (15).

8. Glazed roof according to claim 7, **characterized in that** said first element (162) carries a locking pin cooperating with a notch (17) formed in the shuttle.

9. Glazed roof according to claim 1, **characterized in that** said hooking element has a bolt (23) mounted in the extension of said cable and guided between said fixed attachment position and said detachment position by a guiding ramp fixedly attached to said fixed part.

10. Glazed roof according to claim 9, **characterized in that** said bolt is over-molded on the end of said cable and on an arm (24) that is movable relative to said cable and mounted in its extension.

11. Glazed roof according to claim 9 or 10, **characterized in that** said bolt (23) cooperates with a recess (211) formed in said shuttle element.

12. Glazed roof according to any one of the claims 10 and 11, **characterized in that** a linking sheath (25) fixedly attaches the free end of the cable and one end (24a) of the arm (24).

13. Glazed roof according to any one of the claims 10 to 12, **characterized in that** said arm is made out of a flexible material.

14. Glazed roof according to any one of the claims 10 to 13, **characterized in** said arm comprises a strip that is hinged relative to said cable.

15. Glazed roof according to any one of the claims 10 to 14, **characterized in that** said arm (44) is mounted so as to be rotationally movable relative to the linking part (46) fixedly attached to said cable (43) and/or a sheath (45) that bears it.
